Europäisches Patentamt

European Patent Office

Office européen des brevets

(19)

(11) Publication number: **0 182 535**
**B1**

(12) ## EUROPEAN PATENT SPECIFICATION

(45) Date of publication of patent specification: **25.01.89**

(51) Int. Cl.⁴: **F 16 C 27/08**

(21) Application number: **85308023.2**

(22) Date of filing: **05.11.85**

(54) Thrust bearings.

(30) Priority: **19.11.84 US 672982**

(43) Date of publication of application:
**28.05.86 Bulletin 86/22**

(45) Publication of the grant of the patent:
**25.01.89 Bulletin 89/04**

(84) Designated Contracting States:
**DE FR GB IT SE**

(56) References cited:
**FR-A-2 160 048**
**FR-A-2 451 500**
**GB-A-1 039 434**

**PATENTS ABSTRACTS OF JAPAN, vol. 9, no.
63 (M-365) 1786r, 20th March 1985; & JP - A - 59
197 614 (ISHIKAWAJIMA HARIMA JUKOGYO
K.K.) 09-11-1984**

(73) Proprietor: **ALLIED-SIGNAL INC.
Columbia Road and Park Avenue P.O. Box 2245R
Morristown New Jersey 07960 (US)**

(72) Inventor: **Lee-Van Gu, Alston
5832 Sunmist Drive
Rancho Palos Verdes California 90274 (US)**

(74) Representative: **Rees, David Christopher et al
Kilburn & Strode 30 John Street
London WC1N 2DD (GB)**

Courier Press, Leamington Spa, England.

EP 0 182 535 B1

# Description

Process fluid or gas bearings are now being utilized in an increasing number of diverse applications. These fluid bearings generally comprise two relatively movable elements with a predetermined spacing therebetween filled with a fluid such as air, which, under dynamic conditions, forms a supporting wedge sufficient to prevent contact between the two relatively movable elements.

More recently, improved fluid bearings, particularly gas bearings of the hydrodynamic type, have been developed by providing foils in the space between the relatively movable bearing elements. Such foils, which are generally thin sheets of a compliant material, are deflected by the hydrodynamic film forces between adjacent bearing surfaces and the foils thus enhance the hydrodynamic characteristics of the fluid bearings and also provide improved operation under extreme load conditions when normal bearing failure might otherwise occur. Additionally, these foils provide the added advantage of accommodating eccentricity of the relatively movable elements and further provide a cushioning and dampening effect.

The ready availability of relatively clean process fluid or ambient atmosphere as the bearing fluid makes these hydrodynamic, fluid-film-lubricated, bearings particularly attractive for high speed rotating machinery. While in many cases the hydrodynamic or self-acting fluid bearings provide sufficient load bearing capacity solely from the pressure generated in the fluid film by the relative motion of the two converging surfaces, it is sometimes necessary externally to pressurize the fluid between the bearing surfaces to increase the load carrying capability. While these externally pressurized or hydrostatic fluid bearings do increase the load carrying capacity, they do introduce the requirement for an external source of clean fluid under pressure.

In order properly to position the compliant foils between the relatively movable bearing elements, a number of mounting means have been devised. In thrust bearings, it is conventional practice to mount a plurality of individually spaced foils on a foil bearing disk such as by spot welds and position the foil bearing disk on one of the bearing elements as exemplified in U.S. Patent No. 3,635,534.

To establish stability of the foils in most of these mounting means, a substantial pre-load is required on the foil. That is, the individual foils must be loaded against the relatively movable bearing element opposed to the bearing element upon which the foils are mounted. It has been conventional to provide separate compliant stiffener elements or undersprings beneath the foils to supply this required preload as exemplified in U.S. Patent Nos. 3,893,733 and 4,153,315. Under extremely high load, however, the compliance of these underfoils may be exceeded and the undersprings 'bottom out', thus destroying the load carrying capability of the bearing.

It is an object of the present invention to provide a fluid thrust bearing with a series of compliant foils and an underspring in which the risk of the underspring "bottoming out" is greatly reduced or even avoided.

According to one aspect of the present invention there is provided a fluid thrust bearing comprising a pair of members arranged for relative rotation with respect to one another, one of said pair of members being adapted rotatably to support the other; and a compliant foil bearing operably disposed between said pair of relatively rotatable members and mounted on one of said pair of relatively rotatable members, said compliant foil bearing comprising a thrust disk having a plurality of compliant foils and an underspring including a plurality of upper ridges and lower ridges alternately disposed thereon, characterised in that the upper ridges have a height which is greater than the height of the lower ridges.

Preferably, the pair of members comprise a thrust runner, and a thrust plate rotatably supporting the thrust runner, the compliant foil bearing being mounted on the thrust plate with the compliant foils disposed towards the thrust runner. Preferably, the upper ridges have a height generally between 0.00254 cm and 0.0254 cm greater than the height of the lower ridges.

The compliant foils may be individually mounted on or integral with the thrust disk. Preferably, the upper ridges outwardly diverge radially, the lower ridges outwardly diverge radially, and the space between adjacent lower ridges outwardly converge radially.

The invention also extends to an underspring per se as described above in accordance with the invention.

The invention may be carried into practice in various ways, but one specific embodiment will now be described, by way of example with reference to the accompanying drawings, in which:-

Figure 1 is an exploded perspective view of a foil thrust bearing according to the present invention;

Figure 2 is an enlarged top plan view of the thrust bearing underspring of the foil thrust bearing of Figure 1;

Figure 3 is a side elevation of the thrust bearing underspring of Figure 2 taken along line 3-3 thereof;

Figure 4 is an enlarged under plan view of the thrust bearing underspring of Figure 2;

Figure 5 is an enlarged sectional view of the foil thrust bearing of Figure 1 in a static condition; and

Figure 6 is an enlarged sectional view of the foil thrust bearing of Figure 1 in a dynamic condition.

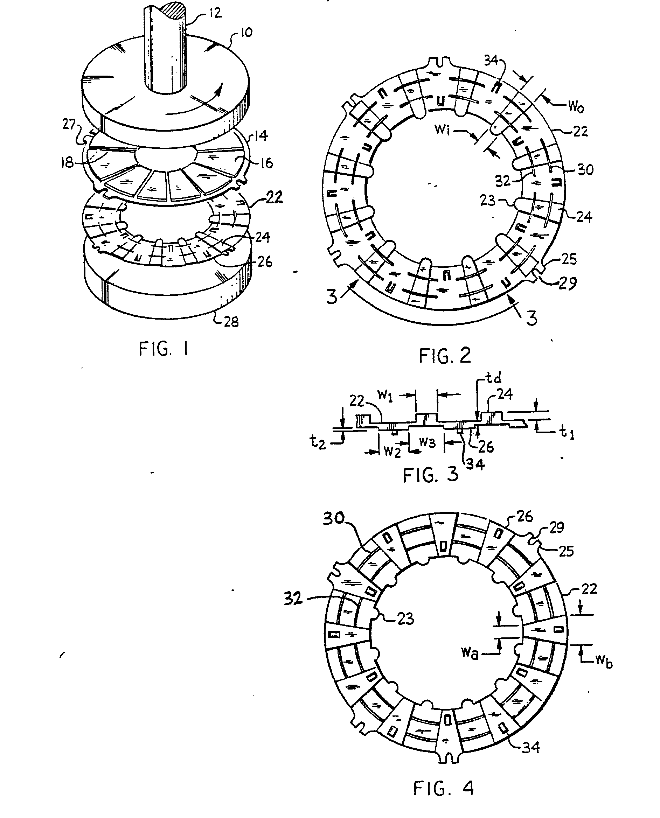

Figure 1 illustrates a thrust runner 10 including shaft 12, the runner 10 being rotatably supported on a thrust plate 28 by means of a thrust bearing disk 14 and a thrust bearing stiffener or underspring 22. The thrust bearing disk 14 has a plurality of bearing pads or foils 16 mounted thereon, while the thrust bearing underspring 22 includes a plurality of upper ridges 24 and lower ridges 26 alternately disposed thereon to provide stiffness for the thrust bearing disk 14.

As more fully shown in Figures 2-4, the thrust bearing underspring 22 generally comprises a thin compliant ring ranging in thickness $t_d$ between 0.00254 cm and 0.508 cm and can be produced by conventional chemical etching techniques. The upper ridges of this thrust bearing underspring 22 have a height defined as $t_1$. The upper ridges 24 diverge radially outwardly in width as best illustrated in Figure 2. The width of these upper ridges 24 is generally defined by $W_1$ with the width at the outer periphery defined as $W_o$ (Figure 2) and the width at the inner periphery defined as $W_i$ (Figure 2). The outer periphery width $W_o$ is generally from 0 to 30% greater than the inner periphery width $W_i$. In the underspring 22 illustrated in Figure 2, the upper ridges 24 are laterally defined by radially emanating lines.

Certain of the upper ridges 24 may include outer projections 25 having cutouts 29 which can be utilized to maintain the position of the underspring 22 with respect to the thrust plate 28. As shown in Figure 1, similar projections 27 may be spaced around the thrust bearing disk 14. The upper ridges 24 may also include inner projections 23 which extend radially inward of the inner periphery of the central aperture of the underspring 22.

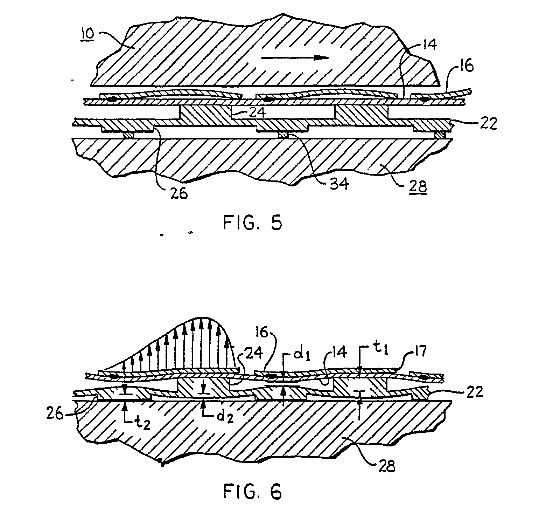

The lower ridges 26 include struck-out springlike tabs 34 extending toward the thrust plate 28. These tabs 34 may be provided near the outer periphery of the lower ridges 26, or near the inner periphery of the lower ridges 26, or alternating between these two positions as shown in Figure 2. The tabs 34 provide the initial pre-load for the bearing assembly to maintain static contact between the thrust plate 28, the stiffener or underspring 22, the thrust disk 24, and the thrust runner 10. These relatively soft tabs 34 readily deform under hydrodynamic pressure such that the lower ridges 26 will contact the thrust plate 28 as illustrated most clearly in Figure 6.

As shown in Figure 3, the height of the lower ridges 26 is defined as $t_2$ with their width generally defined as $W_2$. The lower ridges 26 also diverge outwardly radially with the width at the inner periphery defined as $W_a$ (Figure 4) and the width at the outer periphery defined as $W_b$. As is best illustrated in Figure 4, the outward divergence of the lower ridges 26 is considerably greater than the radial outward divergence of the upper ridges 24. Thus the lateral edges of the lower ridges 26 are defined by a pair of non-radial lines which intersect much closer to the inner periphery of the underspring than the centre point of the underspring. The spacing between the upper ridges 24 and the lower ridges 26 thus outwardly converges as shown by a comparison of Figures 3 and 4.

The dimension for the height $t_1$ of the upper ridges 24 will always be greater than the dimension for the height $t_2$ of the lower ridges 26. While the relationship between $t_1$ and $t_2$ may vary considerably, depending upon different operating conditions, $t_1$ will generally be greater than $t_2$ by between 0.00254 cm to 0.0254 cm in order to accommodate deflection of the thrust disk due to hydrodynamic pressure.

The resiliency or spring rate of the underspring 22 can be varied by changing its thickness or the dimensions of the upper and lower ridges 24, 26. The space between adjacent lower ridges 26, defined as $W_3$ in Figure 3, has a marked effect on the stiffness and will generally outwardly converge at least slightly in order better to accommodate the hydrodynamic pressure forces which increase radially. Additionally, as shown in Figure 2, slots 30, 32 can be provided transversely across the upper ridges 24 to divide the upper ridges into three separate sections. With the radially diverging upper ridges 24 divided into three separate sections, the stiffness of the upper ridges will more closely conform to the radially increasing hydrodynamic pressure forces.

The foil thrust bearing of the present invention is shown further enlarged in Figure 5 (static condition) and Figure 6 (dynamic condition). For purposes of better illustrating the invention, the size of the underspring 22 has been enlarged considerably, more particularly in the axial direction, than the thrust bearing disk 14. It is important, however, to stress the relative position of the disk 14 and its foils 16 with respect to the upper and lower ridges 24, 26 respectively of the underspring 22 and in particular the interaction therebetween in the dynamic condition of Figure 6.

In the static or non-operating condition of Figure 5, the foils 16 of the thrust bearing disk 14 are shown as having the upper ridges 24 of the underspring 22 generally under the trailing edge half thereof. In this static condition neither the disk 14 nor the underspring 22 will be deflected and both will be substantially transverse to the eventual axis of rotation. The arrow provided on the thrust runner 10 indicates the direction of rotational movement that the runner will take with respect to the foils 16 on the disk 14. In order to assist the establishment of the hydrodynamic film between the foils 16 and the thrust runner 10, the foils 16 may be curved as shown in Figure 5 or the leading edge of the foils may be tapered to a thinner thickness than the rest of the foil.

Once relative rotational movement is established between the thrust runner 10 and thrust plate 28, a hydrodynamic fluid film is developed between the thrust disk foils 16 and the thrust runner 10 and the dynamic condition illustrated in Figure 6 will occur. The fluid film pressure gradient established above an individual foil 16 is generally shown by the varying length of arrows provided above the leftmost foil of Figure 6. This pressure is least at the leading edge of the foil and gradually increases over the converging or wedge portion of the foil before the position of the upper ridge 24 of the underspring 22 therebeneath. The maximum pressure occurs in that portion of the foil directly over the upper ridge 24 and then markedly declines to zero near the trailing edge of the foil.

While the dynamic operation of the foil thrust bearing will deform the thrust bearing disk and foils as generally shown in Figure 6, the pressure developed therein will also deflect the underspring 22 as likewise illustrated in Figure 6. The position of the underspring 22 above the lower ridges 26 will not change, but the distance between the underspring 22 above the lower ridges 26 and the underspring side of the disk 14, defined as $d_1$, will generally be 0.00254 cm to 0.0127 cm less than $t_1$ while still providing suitable operation of the thrust bearing.

In addition, under dynamic conditions, the underspring 22 beneath the upper ridges 24 will be deflected towards the thrust plate 28 a distance defined as $d_2$, such that the spacing between the disk 22 and the thrust plate 28 in this region will be less than the height of the lower ridges $t_2$. This spacing, $t_2$-$d_2$ depends on the bearing stiffness and hydrodynamic film pressure.

With $t_1$ at least 0.0127 cm greater than $t_2$, even if $d_2$ approaches or actually equals $t_2$ (bottoms out), the upper ridges 24 will still provide support for the thrust disk 14 so that the hydrodynamic forces will conform the foils to the shape generally shown in Figure 6. If $t_1$ were to be equal to $t_2$, and $d_2$ equal to $t_1$, then the top of the upper ridges 24 would then be no higher than the upper surface of the underspring 22 and the foils 16 would no longer be deflected to form the pressure forming surface as shown.

## Claims

1. A fluid thrust bearing comprising a pair of members arranged for relative rotation with respect to one another, one of said pair of members being adapted rotatably to support the other; and a compliant foil bearing (14, 16) operably disposed between said pair of relatively rotatable members (10, 28) and mounted on one of said pair of relatively rotatable members (28), said compliant foil bearing (14, 16) comprising a thrust disk (14) having a plurality of compliant foils (16) and an underspring (22) including a plurality of upper ridges (24) and lower ridges (26) alternately disposed thereon, characterised in that the upper ridges (24) have a height which is greater than the height of the lower ridges (26).

2. A fluid thrust bearing as claimed in Claim 1 characterised in that the pair of members comprise a thrust runner (10), and a thrust plate (28) rotatably supporting the thrust runner (10), the compliant foil bearing (14, 16) being mounted on the thrust plate (28) with the compliant foils (16) disposed towards the thrust runner (10).

3. A fluid thrust bearing as claimed in Claim 1 or Claim 2 characterised in that the upper ridges (24) have a height generally between 0.00254 cm and 0.0254 cm greater than the height of the lower ridges (26).

4. A fluid thrust bearing as claimed in any preceding claim characterised in that the compliant foils are individually mounted upon the thrust disk.

5. A fluid thrust bearing as claimed in any of Claims 1 to 3 characterised in that the compliant foils are integral with the thrust disk.

6. A fluid thrust bearing as claimed in any preceding claim characterised in that the space between adjacent lower ridges (26) radially converges.

7. A fluid thrust bearing as claimed in any preceding claim characterised in that the upper ridges (24) outwardly diverge radially.

8. The fluid thrust bearing as claimed in any preceding claim characterised in that lower ridges outwardly diverge radially.

9. The fluid thrust bearing as claimed in any preceding claim characterised in that the upper ridges each have at least one transverse slot dividing the upper ridges into at least two segments.

10. An underspring for a foil thrust bearing comprising a compliant ring disk, having a plurality of upper ridges (24) disposed on one surface of the disk and a plurality of lower ridges (26) disposed on the other surface of the disk generally between adjacent upper ridges (24), characterised in that the upper ridges have a height generally between 0.00254 cm and 0.0254 cm greater than the height of the lower ridges (26).

11. An underspring as claimed in Claim 10 the upper ridges (24) outwardly diverge radially, the lower ridges (26) outwardly diverge radially, and the space between adjacent lower ridges (26) outwardly converges radially.

## Patentansprüche

1. Strömungsmitteldrucklager mit einem Paar von Bauteilen, die relativ zueinander drehbar angeordnet sind, wobei eines der Paare von Bauteilen drehbar zur Abstützung des anderen ausgebildet ist, und mit einem nachgiebigen Folienlager (14, 16), das zwischen dem Paar von relativ zueinander drehbaren Bauteilen (10, 28) angeordnet und auf einem Bautiel des Paares von relativ zueinander drehbaren Bauteilen (28) befestigt ist, und das eine Druckschiebe (14) mit einer Vielzahl von nachgiebigen Folien (16) und einer Unterfeder (22) mit einer Vielzahl von abwechselnd angeordneten oberen Rippen (24) und unteren Rippen (26) aufweist, dadurch gekennzeichnet, daß die oberen Rippen (24) eine Höhe haben, die großer ist als die Höhe der unteren Rippen (26).

2. Strömungsmitteldrucklager nach Anspruch 1, dadurch gekennzeichnet, daß das Paar von Bauteilen einen Druckläufer (10) und eine Druckplatte (28), die den Druckläufer (10) drehbar trägt, aufweist, und daß das nachgiebige Folienlager (14, 16) auf der Druckplatte (28) so befestigt ist, daß die nachgiebigen Folien (16) gegen den Druckläufer (10) anliegen.

3. Strömungsmitteldrucklager nach Anspruch 1 oder 2, dadurch gekennzeichnet, daß die iberen Rippen (24) eine um etwa zwischen 0,00254 cm und 0,0254 cm größere Höhe als die Höhe der unteren Rippen (26) haben.

4. Strömungsmitteldrucklager nach einem der vorausgehenden Ansprüche, dadurch gekennzeichnet, daß die nachgiebigen Folien einzeln auf der Druckscheibe befestigt sind.

5. Strömungsmitteldrucklager nach einem der Ansprüche 1 - 3, dadurch gekennzeichnet, daß die nachgiebigen Folien einstückig mit der Druckscheibe ausgebildet sind.

6. Strömungsmitteldrucklager nach einem der vorausgehenden Ansprüche, dadurch gekennzeichnet, daß der Raum zwischen benachbarten unteren Rippen (26) radial konvergiert.

7. Strömungsmitteldrucklager nach einem der vorausgehenden Ansprüche, dadurch gekennzeichnet, daß die oberen Rippen (24) nach außen radial divergieren.

8. Strömungsmitteldrucklager nach einem der vorausgehenden Ansprüche, dadurch gekennzeichnet, daß die unteren Rippen nach außen radial divergieren.

9. Strömungsmitteldrucklager nach einem der vorausgehenden Ansprüche, dadurch gekennzeichnet, daß die oberen Rippen jeweils mindestens einen Querschlitz aufweisen, der die oberen Rippen in mindestens zwei Abschnitte unterteilt.

10. Unterfeder für ein Strömungsmitteldrucklager mit einer nachgiebigen Ringscheibe, mit einer Vielzahl von oberen Rippen (24), die auf einer Oberfläche der Scheibe angeordnet sind, und einer Vielzahl von unteren Rippen (26), die auf der anderen Oberfläche der Scheibe etwa zwischen benachbarten oberen Rippen (24) angeordnet sind, dadurch gekennzeichnet, daß die oberen Rippen eine um etwa zwischen 0,00254 cm und 0,0254 cm größere Höhe als die Höhe der unteren Rippen (26) haben.

11. Unterfeder nach Anspruch 10, bei der die oberen Rippen (24) radial nach außen divergieren, die unteren Rippen (26) radial nach außen divergieren und der Raum zwischen benachbarten unteren Rippen (26) radial nach außen konvergiert.

**Revendications**

1. Palier de butée à fluide comprenant deux éléments disposés pour une rotation relative de l'un par rapport à l'autre, l'un de ces deux éléments étant prévu pour supporter l'autre de façon tournante; et un coussinet à lames flexibles (14, 16) disposé fonctionnellement entre les dits deux éléments en rotation relative (10, 28) et monté sur l'un des dits deux éléments en rotation relative (28), ledit coussinet à lames flexibles (14, 16) comprenant un disque de butée (14), qui porte une pluralité de lames flexibles (16), et un ressort inférieur (22) comportant une pluralité de surélévations supérieures (24) et de surélévations inférieures (26) disposées en alternance sur le ressort inférieur, caractérisé en ce que les surélévations supérieures (24) ont une hauteur qui est plus grande que la hauteur des surélévations inférieures (26).

2. Palier de butée à fluide suivant la revendication 1, caractérisé en ce que les deux éléments comprennent un élément mobile de poussée axiale (10) et une plaque de butée (28) supportant de façon tournante l'élément mobile de poussée (10), le coussinet à lames flexibles (14, 16) étant monté sur la plaque de butée (28) de sorte que les lames flexibles (16) sont disposées vers l'élément mobile de poussée (10).

3. Palier de butée à fluide suivant la revendication 1 ou la revendication 2, caractérisé en ce que les surélévations supérieures (24) ont une hauteur sensiblement supérieure, d'une valeur comprise entre 0,00254 cm et 0,0254 cm, à la hauteur des surélévations inférieures (26).

4. Palier de butée à fluide suivant l'une quelconque des revendications précédentes, caractérisé en ce que les lames flexibles sont montées individuellement sur le disque de butée.

5. Palier de butée à fluide suivant l'une quelconque des revendications 1 à 3, caractérisé en ce que les lames flexibles font partie intégrante du disque de butée.

6. Palier de butée à fluide suivant l'une quelconque des revendications précédentes, caractérisé en ce que l'espace entre des surélévations inférieures adjacentes (26) converge radialement.

7. Palier de butée à fluide suivant l'une quelconque des revendications précédentes, caractérisé en ce que les surélévations supérieures (24) divergent radialement vers l'extérieur.

8. Palier de butée à fluide suivant l'une quelconque des revendications précédentes, caractérisé en ce que les surélévations inférieures divergent radialement vers l'extérieur.

9. Palier de butée à fluide suivant l'une quelconque des revendications précédentes, caractérisé en ce que les surélévations supérieures comportent chacune au moins une fente transversale divisant les surélévations supérieures en au moins deux segments.

10. Ressort inférieur pour palier de butée à lames, comprenant un disque annulaire flexible, qui comporte une pluralité de surélévations supérieures (24) disposées sur une surface du disque et une pluralité de surélévations inférieures (26) disposées sur l'autre surface du disque sensiblement entre des surélévations supérieures adjacentes (24), caractérisé en ce que les surélévations supérieures ont une hauteur supérieure, d'une valeur sensiblement comprise entre 0,00254 cm et 0,0254 cm, à la hauteur des surélévations inférieures (26).

11. Ressort inférieur suivant la revendication 10, dont les surélévations supérieures (24) divergent radialement vers l'extérieur, les surélévations inférieures (26) divergent radialement vers l'extérieur, et l'espace entre les surélévations inférieures adjacentes (26) converge radialement vers l'extérieur.

FIG. 1

FIG. 2

FIG. 3

FIG. 4

FIG. 5

FIG. 6